(19) Europäisches Patentamt
European Patent Office
Office européen des brevets

(11) **EP 2 437 958 B1**

(12) **EUROPÄISCHE PATENTSCHRIFT**

(45) Veröffentlichungstag und Bekanntmachung des Hinweises auf die Patenterteilung:
**16.11.2016 Patentblatt 2016/46**

(21) Anmeldenummer: **10722676.3**

(22) Anmeldetag: **26.05.2010**

(51) Int Cl.:
*B60K 28/16* (2006.01)     *B60T 8/175* (2006.01)
*B60W 10/04* (2006.01)     *B60W 10/18* (2012.01)
*B60W 30/18* (2012.01)     *B60T 8/32* (2006.01)
*B60W 50/00* (2006.01)

(86) Internationale Anmeldenummer:
**PCT/EP2010/057193**

(87) Internationale Veröffentlichungsnummer:
**WO 2010/139574 (09.12.2010 Gazette 2010/49)**

(54) **VERFAHREN ZUR ANTRIEBSSCHLUPFREGELUNG EINES KRAFTFAHRZEUGS UND ANTRIEBSSCHLUPFREGELSYSTEM**

METHOD AND SYSTEM FOR CONTROLLING TRACTION OF A VEHICLE

PROCEDE ET SYSTEME POUR REGULER LA TRACTION D'UN VEHICULE

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **05.06.2009 DE 102009024036**

(43) Veröffentlichungstag der Anmeldung:
**11.04.2012 Patentblatt 2012/15**

(73) Patentinhaber: **Continental Teves AG & Co. oHG 60488 Frankfurt (DE)**

(72) Erfinder:
• **CASPARI, Roland**
**60488 Frankfurt (DE)**
• **SCHNEIDER, Gerold**
**35085 Ebsdorfergrund (DE)**

(56) Entgegenhaltungen:
**EP-A1- 0 992 388     EP-A1- 2 172 378
DE-A1- 4 229 560     DE-A1- 10 107 455
DE-A1- 19 654 769     DE-A1- 19 913 825**

• **ZANTEN VAN A T ET AL: "DIE FAHRDYNAMIKREGELUNG VON BOSCH" AUTOMATISIERUNGSTECHNIK - AT, OLDENBOURG WISSENSCHAFTSVERLAG, MUNCHEN, DE, Bd. 44, Nr. 7, 1. Juli 1996 (1996-07-01), Seiten 359-365, XP000592696 ISSN: 0178-2312**

**Beschreibung**

Die Erfindung betrifft ein Verfahren gemäß Oberbegriff von Anspruch 1 sowie eine Antriebsschlupfregelsystem gemäß Oberbegriff von Anspruch 11.

In der DE 10 2004 008 265 A1 wird ein Verfahren für Kraftfahrzeuge offenbart mit einem Radschlupfregelsystem, welches über Mittel zur Erfassung Radschlupfes an einem oder mehreren Fahrzeugrädern verfügt, einem Radschlupfregler, der ein oder mehrere radindividuelle Stellgrößen erzeugt, und ein oder mehreren Aktuatoren, mit denen der Radschlupf mit der radindividuellen Stellgröße verändert werden kann. Zur Verbesserung des Regelungssystems wird wenigstens eine radindividuelle Stellgröße des Radschlupfreglers durch eine die Radaufstandskraft an dem entsprechenden Rad repräsentierende Korrekturgröße zu einer neuen Stellgröße für die Aktuatoren verändert.

So ein Verfahren und Antriebsschlupfregelsystem ist aus Zanten van A T et al.: "Die Fahrdynamikregelung von Bosch" Automatisierungstechnik - AT, Oldenburg Wissenschaftsverlag, München, DE Bd. 44, Nr. 7, 1. Juli 1996 (1996-07-01), Seiten 359-365, XP000592696 ISSN: 0178-2312 beschrieben, versuchen durch Motor- und Bremseingriffe einen Zielschlupf der Antriebsräder einzuregeln. Dabei sind die bekannten Antriebsschlupfregler durch zwei unabhängige Regler, nämlich dem Bremsenregler und dem Motorregler, realisiert. Beide Regler regeln über die zur Verfügung stehen Aktuatorik ihre Schlupfziele ein. Beim Bremsenregler wird hierzu ausschließlich der Aktuator Bremse und beim Motorregler ausschließlich der Aktuator Motor genutzt. Da der Bremsenregler und der Motorregler unterschiedliche Schlupfziele haben können, erhält üblicherweise der Regler mit der kleinsten Schlupfzielvorgabe den Vorrang.

Der oben beschriebene Antriebsschlupfregler mit zwei unabhängigen Reglern für Bremsen und Motor kann, wenn beide Regler aktiv sind, zu den folgenden Schwierigkeiten führen. Aufgrund der Entkopplung beider Regler, können die Regler nur verzögert auf die Eingriffe des jeweiligen anderen Reglers reagieren. Es kann daher zu einer Überreaktion beider Regler zum Erreichen ihrer Schlupfziele kommen. Zwar sind aus dem Stand der Technik Korrekturen bzw. komplexe Regeln zur Berücksichtigung der verschiedenen Abhängigkeiten der involvierten Größen bzw. zur Abstimmung der beiden Regler bekannt, deren Nutzen ist jedoch aufgrund der prinzipiellen Nachteile eines Reglerentwurfs mit zwei unabhängigen Reglern für Bremsen und Motor nur begrenzt. Außerdem sind diese Korrekturen bzw. komplexe Regeln programmiertechnisch aufwendig zu realisieren und damit unübersichtlich. Des Weiteren können unterschiedliche Schlupfziele der beiden Regler dazu führen, dass der Regler mit dem höheren Schlupfziel zum vorzeitigen Verlassen der Regelung neigt, weil sein Zielschlupf größer ist als das des anderen Reglers. Ohne den Eingriff des Reglers mit der höheren Schlupfzielvorgabe kann aber der Regler mit dem kleineren Schlupfziel sein Ziel nicht erreichen. Ein stationärer Arbeitspunkt in der Nähe der kleinsten Schlupfzielvorgabe wird so oftmals nicht gefunden.

Aufgabe der Erfindung ist es daher, ein Verfahren zur Antriebsschlupfregelung sowie ein Antriebsschlupfregelsystem bereitzustellen, welches die oben genannten Nachteile überwindet.

Diese Aufgabe wird erfindungsgemäß durch das Verfahren nach Anspruch 1 sowie das Antriebsschlupfregelsystem nach Anspruch 11 gelöst.

Der Erfindung liegt der Gedanke zugrunde, dass der Antriebsschlupfregler mindestens zwei lineare Teilregler umfasst, welche jeweils einen Stellgrößenvorschlag sowohl für die Radbremse als auch für den Antriebsmotor bestimmen, und dass die Ausgabestellgröße des Antriebsschlupfregler, welche eine Ausgabestellgröße für die Radbremse und eine Ausgabestellgröße für den Antriebsmotor umfasst, aus den Stellgrößenvorschlägen der Teilregler durch gewichtete Addition bestimmt wird. Dadurch, dass jeder Teilregler zur Bestimmung einer Bremsen- und einer Motorstellgröße ausgelegt ist, wird die miteinander gekoppelte Wirkung der Regelung von Motor und Bremse besser berücksichtigt.

Unter dem Begriff "radspezifische Kerngröße" wird erfindungsgemäß eine Verallgemeinerung des Begriffs Raddrehzahlgröße verstanden. So werden unter dem Begriff auch alle anderen Raddrehbewegungsgrößen verstanden, welche direkt mit der Raddrehzahl verknüpft sind, wie z.B. Umlaufzeit, Winkelgeschwindigkeit oder Drehgeschwindigkeit.

Bevorzugt werden die Raddrehzahlinformationen der Raddrehzahlsensoren eines Antiblockiersystems (ABS) als radspezifische Kenngrößen herangezogen.

Gemäß einer bevorzugten Ausführungsform des erfindungsgemäßen Verfahrens wird die Ausgabestellgröße für die Radbremse durch gewichtete Addition aus den mindestens zwei Stellgrößenvorschlägen für die Radbremse der mindestens zwei Teilregler bestimmt sowie die Ausgabestellgröße für den Antriebsmotor durch gewichtete Addition aus den mindestens zwei Stellgrößenvorschlägen für den Antriebsmotor der mindestens zwei Teilregler bestimmt.

Eine Schwierigkeit bei einem Entwurf eines Antriebsschlupfreglers ist die starke Nichtlinearität des zu regelnden Systems aus Fahrzeug und Fahrbahn. Eine wesentliche Ursache für die Nichtlinearität sind die Radkräfte an den Rädern, welche somit das Systemverhalten stark beeinflussen. Daher ist der Regler vorteilhafterweise derart ausgelegt, dass die Radkräfte des/der angetriebenen Rades/Räder einen Einfluss auf die Regelstrategie haben. Bevorzugt wird für den Entwurf des Reglers die Radkraft eines angetriebenen Rades als eine gewichtete Summe von mindestens zwei charakteristischen Radkräften angesetzt. Besonders bevorzugt wird die Radkraft jedes angetriebenen Rades als eine gewichtete Summe von mindestens zwei charakteristischen Radkräften dargestellt, um eine einheitliche Regelung aller angetriebenen Räder zu erzielen. Jede charakteristische Radkraft wird dabei als eine lineare Funktion des Schlupfs des entsprechenden Rades mit einer vorgegebenen Steigungsgröße dargestellt. Die Gewichtung der einzelnen charakteristischen Radkräfte ist in Form von Gewichtsfunktionen in Abhängigkeit von einer Radkraftvariablen des entsprechenden angetriebenen Rades vorgegeben, wobei die Radkraftvariable des entsprechenden Rades aus einer aktuellen Radkraft und einem aktuellen Radschlupf bestimmt wird. Durch diesen beschriebenen Ansatz von charakteristischen Radkräften können lineare Teilregler eingesetzt werden.

Gemäß einer Weiterbildung der Erfindung wird die gewichtete Addition der Stellgrößenvorschläge der Teilregler in Abhängigkeit von einer Radkraftvariablen des angetriebenen Rades bzw. von den Radkraftvariablen der angetriebenen Räder durchgeführt, wobei für jedes angetriebene Rad die Radkraftvariable aus einer aktuellen Radkraft und einem aktuellen Radschlupf bestimmt wird. Hierdurch werden die aktuellen Radkräfte der angetriebenen Räder in der Ausgabestellgröße des Antriebsschlupfregler berücksichtigt, wobei eine Gewichtung der Ergebnisse der Teilregler entsprechend der aktuell vorliegenden Situation stattfindet. Besonders bevorzugt wird die Radkraftvariable unter Berücksichtigung mindestens zweier vorgegebener Steigungsgrößen und mindestens zweier vorgegebener Gewichtsfunktionen, welche die Radkraftvariable als Variable enthalten, bestimmt.

Für die Möglichkeit einer einfachen anschaulichen Interpretation, welche auch spätere Modifikationen des Reglers vereinfacht, sind die Werte der beiden Steigungsgrößen bevorzugt derart vorgegeben, dass die eine charakteristische Radkraft einer Situation entspricht, in welcher das Rad mit einer Oberfläche mit einem Niedrigreibwert in Kontakt steht, und die andere charakteristische Radkraft einer Situation entspricht, in welcher das Rad mit einer Oberfläche mit einem Hochreibwert in Kontakt steht.

Im Falle eines Fahrzeuges mit einem einzigen angetriebenen Rad ist jeder lineare Teilregler bevorzugt für eine der charakteristischen Radkräfte entworfen. Im Falle eines Fahrzeuges mit mindestens zwei angetriebenen Rädern sind die linearen Teilregler für alle verschiedenen Kombinationen von charakteristischen Radkräften der angetriebenen Räder entworfen.

Bei zwei angetriebenen Rädern umfasst der Regler bevorzugt vier lineare Teilregler, wobei ein erster Teilregler für eine Kombination von charakteristischen Radkräften entworfen ist, bei welcher beide Räder mit einer Oberfläche mit einem Niedrigreibwert in Kontakt stehen, ein zweiter und ein dritter Teilregler für jeweils eine Kombination von charakteristischen Radkräften entworfen ist, bei welcher eines der beiden Räder mit einer Oberfläche mit einem Niedrigreibwert in Kontakt steht während das andere der beiden Räder mit einer Oberfläche mit einem Hochreibwert in Kontakt steht, und ein vierter Teilregler für eine Kombination von charakteristischen Radkräften entworfen ist, bei welcher beide Räder mit einer Oberfläche mit einem Hochreibwert in Kontakt stehen.

Eine besonderes einfacher Entwurf des Reglers ergibt sich, wenn die Radkraft jedes angetriebenen Rades als gewichtete Summe von zwei charakteristischen Radkräften betrachtet wird, wobei eine der beiden Gewichtsfunktionen einfach durch die Radkraftvariable des entsprechenden Rades selbst und die andere Gewichtsfunktion durch die Differenz von Eins und der Radkraftvariablen gegeben ist.

Zur Berücksichtigung der Beiträge der Teilregler an der Ausgabestellgröße entsprechend der aktuellen Radkraftsituation werden die Stellgrößenvorschläge der Teilregler bevorzugt gewichtet mit jeweiligen Gewichtungsfaktoren zu der Ausgabestellgröße aufaddiert, wobei die Gewichtungsfaktoren anhand von vorgegebenen Zugehörigkeitsfunktionen aus der Radkraftvariable des Rades oder den Radkraftvariablen der Räder bestimmt werden. Eine Zuordnung von Radkraftvariable(n) und Gewichtungsfaktoren geschieht besonders bevorzugt durch eine Fuzzy-Logik, um eine möglichst differenzierte Widergabe der aktuellen Situation zu erzielen.

Jeder Teilregler wird vorzugsweise durch zumindest einen vorgegebenen Regelparameter oder Regelparametersatz festgelegt.

Zur besseren Anpassung des Reglers an Wünsche des Fahrers und/oder den aktuellen Fahrzustand ist es jedoch auch bevorzugt, dass für zumindest einen, insbesondere für jeden, Teilregler zumindest zwei unterschiedliche Regelparameter oder Regelparametersätze vorgegeben sind, und dass der Regler in Abhängigkeit von einem Betriebszustand, insbesondere einem Tasterzustand, und/oder von einem Fahrzustand, insbesondere der Fahrzeuggeschwindigkeit, zwischen den unterschiedlichen Regelparametern oder Regelparametersätzen des Teilreglers bzw. der Teilregler umschaltet.

Den Teilreglern ist zur Bestimmung der Stellgrößenvorschläge bevorzugt mindestens eine Nebenbedingung vorgegeben. Besonders bevorzugt handelt es sich bei der Nebenbedingung um eine Vorgabe zur Begrenzung der Stellgrößenvorschläge. Hierdurch werden physikalisch sinnvolle Stellgrößenvorschläge jedes Teilreglers erzielt.

Gemäß einer Weiterbildung der Erfindung ist jeder lineare Teilregler als ein Zustandsregler mit integraler Rückführung ausgeführt.

Die Erfindung betrifft auch ein Antriebsschlupfregelsystem.

Gemäß einer bevorzugten Ausführungsform des erfindungsgemäßen Antriebsschlupfregelsystems umfasst der Regler eine Umschaltlogik, in welcher in Abhängigkeit von einem erfassten Betriebszustand, insbesondere einem Tasterzustand, und/oder von einem erfassten Fahrzustand, insbesondere der Fahrzeuggeschwindigkeit, zwischen unterschiedlichen Regelparametern oder Regelparametersätzen des Teilreglers oder der Teilregler umgeschaltet werden kann.

Einige Vorteile der Erfindung gegenüber bekannten Antriebsschlupfregelverfahren/-systemen liegen darin, dass

- die Nichtlinearität sehr gut erfasst wird,
- für die typisch angenommenen Radkraftmuster Teilregler auf Basis der linearen Regelungstechnik entworfen werden können,
- sich eine einfach strukturierte und gut wartbare Regelstruktur ergibt, und
- der Regler im Fahrzeug leicht angepasst werden kann.

Weitere bevorzugte Ausführungsformen ergeben sich aus den Unteransprüchen und der nachfolgenden Beschreibung an Hand von Figuren.

Es zeigen schematisch

Fig. 1 ein Flussdiagramm einer Antriebsschlupfregelung gemäß dem Stande der Technik,

Fig. 2 ein Flussdiagramm eines ersten Ausführungsbeispiels einer erfindungsgemäßen Antriebsschlupfregelung,

Fig. 3 beispielsgemäße Radkraftverläufe in Abhängigkeit eines Radschlupfs,

Fig. 4 ein Flussdiagramm eines zweiten Ausführungsbeispiels einer erfindungsgemäßen Antriebsschlupfregelung,

Fig. 5 ein Flussdiagramm eines dritten Ausführungsbeispiels einer erfindungsgemäßen Antriebsschlupfregelung, und

Fig.6 ein Flussdiagramm eines vierten Ausführungsbeispiels einer erfindungsgemäßen Antriebsschlupfregelung.

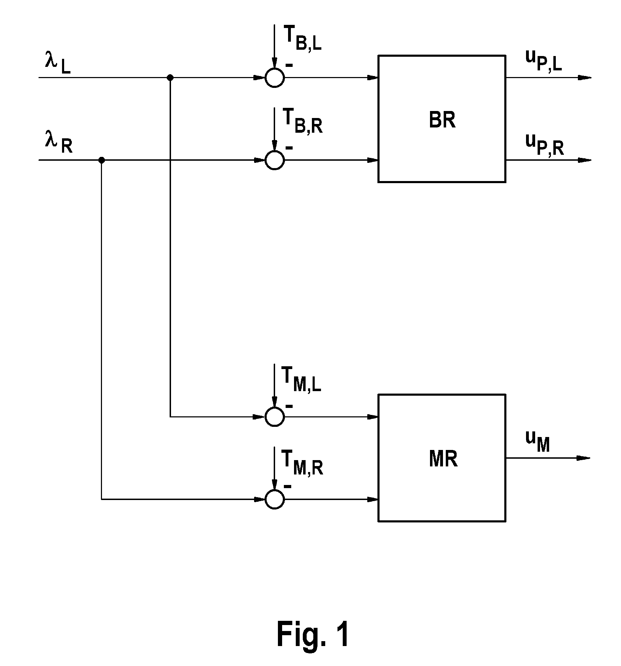

Fig. 1 zeigt eine Reglerstruktur einer Antriebsschlupfregelung für ein Fahrzeug mit einem angetrieben rechten (R) und linken (L) Rad gemäß dem Stande der Technik. Der Antriebsschlupfregler umfasst zwei unabhängige Regler, nämlich den Bremsenregler BR und den Motorregler MR. Beiden Reglern BR und MR werden die Schlüpfe des linken $\lambda_L$ und rechten $\lambda_R$, angetriebnen Rades des als Eingangsgrößen bereitgestellt. Zusätzlich werden dem Bremsregler BR entsprechende Schlupfschwellen $T_{B,L}$ und $T_{B,R}$ für beide Räder für die Bremsregelung sowie dem Motorregler MR entsprechende Schlupfschwellen $T_{M,L}$ und $T_{M,R}$ für die Motorregelung bereitgestellt. Der Bremsenregler BR gibt lediglich Stellgrößen $u_{P,L}$ und $u_{P,R}$ für die Radbremsen und der Motorregler BR lediglich eine Stellgröße $u_M$ für den Antriebsmotor aus.

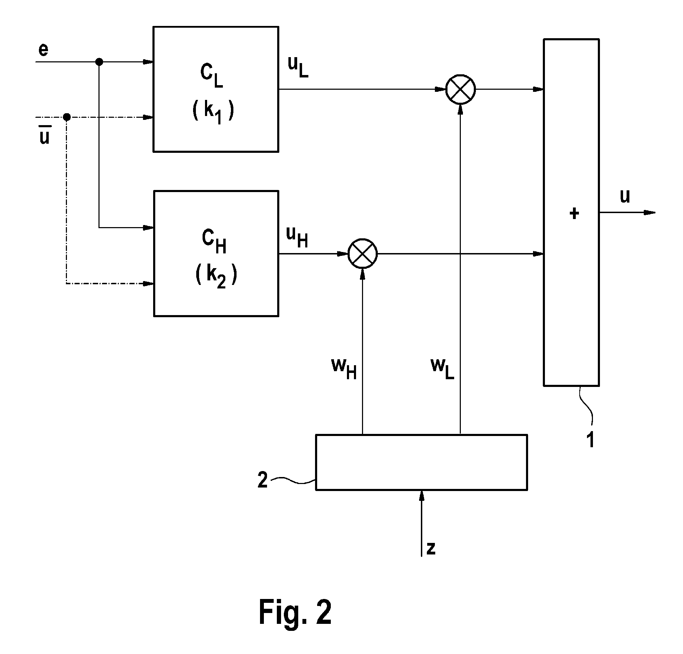

Fig. 2 zeigt eine Reglerstruktur eines ersten Ausführungsbeispiels einer erfindungsgemäßen Antriebsschlupfregelung für ein Fahrzeug mit einem angetriebenen Rad. Von einer übergeordneten Struktur des Antriebsschlupfregelsystems wird eine Sollgröße $\omega_{soll}$ der Raddrehzahl des Rades vorgegeben. Mit e ist die Regelabweichung zwischen aktueller Raddrehzahl $\omega$ und Raddrehzahlsollgröße $\omega_{soll}$ bezeichnet. Die Regelabweichung e soll von dem Regler zu Null ausgeregelt werden. Die Regelabweichung e ist eine Eingangsgröße des Reglers. Der Regler umfasst zwei lineare Teilregler $C_L$ und $C_H$. Jeder der beiden Teilregler $C_L$, $C_H$ liefert einen Stellgrößenvorschlag $u_L$, $u_H$, der sowohl einen Stellgrößenvorschlag $u_{L,P}$, $u_{H,P}$ für die Radbremse als auch einen Stellgrößenvorschlag $u_{L,M}$, $u_{H,M}$ für den Antriebsmotor umfasst (mathematische Darstellung z.B. als Vektor, d.h. $u_L = u_{L,P}$, $u_{L,M}$) und $U_H = (u_{H,P}, u_{H,M})$). Aus den Stellgrößenvorschlägen $u_L$, $u_H$ der beiden Teilregler $C_L$, $C_H$ wird durch gewichtete Addition in Block 1 eine (Gesamt)Ausgabestellgröße u bestimmt, welche eine Stellgröße $u_P$ für die Radbremse und eine Stellgröße $u_M$ für den Motor umfasst (entsprechend $u = (u_P, u_M)$). Weitere, optionale Merkmale des in Fig. 2 dargestellten Ausführungsbeispiels werden weiter unten beschrieben.

Eine Schwierigkeit für den Entwurf einer Antriebsschlupfregelung ist die starke Nichtlinearität des zu regelnden Systems aus Fahrzeug und Fahrbahn. Wesentliche Ursache für die Nichtlinearität sind die Radkräfte an den Rädern. Geringe Radkräfte, wie auf Niedrigreibwertfahrbahnen, stabilisieren die Radgeschwindigkeiten kaum. Das zu regelnde System neigt zur Instabilität. Hohe Radkräfte, wie auf Hochreibwertfahrbahnen, stabilisieren den Verlauf der Radgeschwindigkeiten. Das zu regelnde System ist von sich aus stabil. Die Radkräfte beeinflussen das Systemverhalten somit stark. Die Erfindung ist daher vorteilhafterweise derart ausgelegt, dass die Radkräfte einen entscheidenden Einflussfaktor auf die Regelstrategie darstellen.

Entsprechend einer Weiterbildung der Erfindung wird eine große Zahl möglicher Radkräfte durch eine gewichtete Überlagerung von einigen charakteristischen Radkräften dargestellt. Für die charakteristischen Radkräfte besteht jeweils eine lineare Beziehung zwischen Radkraft und Schlupf. Dies erlaubt die Modellierung von linearen Teilsystemen und den Entwurf von linearen Teilreglern für die Teilsysteme. Das ursprüngliche nichtlineare System wird dadurch regelbar gemacht, dass die linearen Teilregler bzw. deren Ergebnisse gewichtet überlagert werden. Dabei wird vorteilhafterweise eine Gewichtung der Teilregler bzw. ihrer Stellgrößenvorschläge gewählt, welche zu der Gewichtung der charakteristischen Radkräfte in der/den aktuell anliegenden Radkraft/ Radkräfte korrespondiert. Somit beeinflussen die aktuell wirkenden Radkräfte direkt die Antriebsschlupfregelung. Diese Aspekte der Weiterbildung der Erfindung sollen im Folgenden zunächst anhand eines Fahrzeugs mit einem einzelnen angetriebenen Rad, z.B. einem Motorrad, erläutert werden. Eine Erweiterung auf Fahrzeuge mit zwei oder mehr angetriebenen Rädern ist dann möglich.

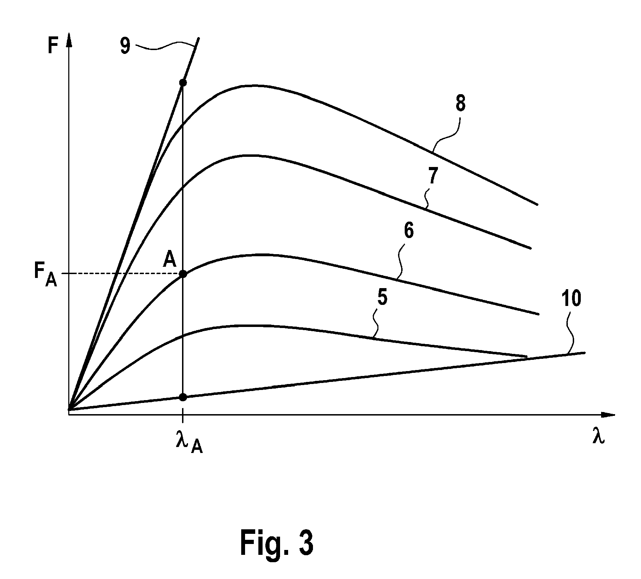

Die Radantriebskraft (kurz: Radkraft) F ist für einen gegebenen Reibwertuntergrund mit einem Reibwert abhängig von der Aufstandskraft $F_N$ und dem relativen Radschlupf $\lambda$. Fig. 3 zeigt schematisch vier beispielsgemäße Radkraftverläufe 5, 6, 7, 8 über dem Radschlupf $\lambda$. Die verschiedenen Radkraftverläufe 5, 6, 7, 8 können von unterschiedlichen Reibwertuntergründen (unterschiedliche Reibwerte $\mu$) und/oder Aufstandskräften $F_N$ herrühren, die genaue Ursache ist aber für das Folgende nicht von Bedeutung. Radkraftverlauf 6 entspricht z.B. einem verschneiten Untergrund, und Radkraftverlauf 8 entspricht z.B. einem trockenen asphaltierten Untergrund.

Beispielsgemäß wird eine Radkraft F als gewichtete Summe von i (mindestens zwei) charakteristischen Radkräften $F_i$ dargestellt (i=1, 2, ..., N, mit N≥2), wobei jede charakteristische Radkraft $F_i$ eine lineare Funktion des Radschlupfes $\lambda$ mit einer vorgegebenen Steigung $z_i$ ist, wobei die Gewichtung der einzelnen charakteristischen Radkräfte $F_i$ in Form von (vorgegebenen) Gewichtsfunktionen $f_i(z)$ in Abhängigkeit einer Variablen z angesetzt wird:

$$F(\lambda) = \sum_{i=1}^{N} f_i(z) \cdot F_i(\lambda) = \sum_{i=1}^{N} f_i(z) \cdot z_i \cdot \lambda \qquad (1)$$

Bevorzugt sind die Gewichtsfunktionen $f_i(z)$ normiert, d.h. es gilt:

$$\sum_{i=1}^{N} f_i(z) = 1 \qquad\qquad \texttt{für alle z} \qquad (2)$$

Eine spätere Normierung durch Division durch die Summe aus Gleichung (2) ist jedoch auch möglich.

Gemäß einem einfachen Ausführungsbeispiel wird die Radkraft F durch zwei charakteristische Radkräfte $F_{max}$ und $F_{min}$ dargestellt (i=max, min; N=2). Dies ist anschaulich in Fig. 3 dargestellt. Die Radkraftverläufe 5, 6, 7, 8 liegen beispielsgemäß innerhalb einer von zwei Geraden 9, 10 begrenzten Fläche. Dabei sei die Steigung der Geraden 9 mit $z_{max}$ bezeichnet, d.h. Gerade 9 wird durch die lineare Funktion

$$F_{max}(\lambda) = z_{max} \cdot \lambda \qquad (3)$$

beschrieben, und analog sei die Steigung der Geraden 10 mit $z_{min}$ bezeichnet, d.h. Gerade 10 wird durch die lineare Funktion

$$F_{min}(\lambda) = z_{min} \cdot \lambda \qquad (4)$$

beschrieben.

Jeder Punkt auf einem der Radkraftverläufe 5, 6, 7, 8 kann durch eine Kombination eines Punktes der oberen Gerade 9 und der unteren Gerade 10 erreicht bzw. dargestellt werden.

Betrachtet man z.B. einen Punkt A auf dem Radkraftverlauf 6, bei dem die Radkraft $F_A$ durch den Schlupf $\lambda_A$ verursacht wird. Die Radkraft $F_A$ wird nun durch eine Kombination der beiden Geraden 9, 10 ausgedrückt gemäß

$$F_A(\lambda_A) = (1-z) \cdot F_{max}(\lambda_A) + z \cdot F_{min}(\lambda_A) = (1-z) \cdot z_{max} \cdot \lambda_A + z \cdot z_{min} \cdot \lambda_A$$

$$(5)$$

wobei für die beiden Gewichtsfunktionen $f_{max}(z)$ und $f_{min}(z)$ beispielsgemäß die folgenden Funktionen der Variablen z gewählt wurden:

$$f_{min}(z) = z \qquad\qquad (6)$$

$$f_{max}(z) = 1 - z$$

Für die Radkraftvariable z gilt dann:

$$z = (F_A / \lambda_A - z_{max}) / (z_{min} - z_{max}) \qquad (7)$$

d.h. die Variable z ist (für gegebene Gewichtsfunktionen $f_{min}$, $f_{max}$ und Steigungen $z_{min}$, $z_{max}$) durch die (aktuellen) Werte von Radkraft $F_A$ und Schlupf $\lambda_A$ festgelegt.

Gleichung (5) teilt die ursprüngliche, nichtlineare Radkraft $F_A$ in zwei lineare Radkräfte $F_{max}$, $F_{min}$ auf, die im Folgenden charakteristische Radkräfte genannt werden. Die charakteristischen Radkräfte werden über eine Gewichtung in Abhängigkeit der Variablen z zur Radkraft F zusammengefügt. Die Nichtlinearität wird dabei durch die Variable z erfasst.

Beispielsgemäß wird die Radkraft F also gemäß

$$F(\lambda) = (1 - z) \cdot z_{max} \cdot \lambda + z \cdot z_{min} \cdot \lambda \qquad (8)$$

in Abhängigkeit von dem Schlupf $\lambda$ und der Variablen z genähert. Dieser Ansatz erlaubt den Entwurf zweier linearer Teilmodelle. Das erste Teilmodell wird für den Verlauf einer charakteristischen Radkraft gemäß $z_{min} \cdot \lambda$ (entspricht einem niedrigen Reibwert $\mu$, "low $\mu$", L) und das zweite Teilmodell für einen charakteristischen Radkraftverlauf gemäß $z_{max} \cdot \lambda$ (entspricht einem großen Reibwert $\mu$, "high $\mu$", H) entworfen.

Vorteilhafterweise wird anstelle der Abhängigkeit der Radkraft F vom relativen Schlupf $\lambda$ eine Abhängigkeit der Radkraft F von einer Raddrehzahlgröße $\omega$ und der Fahrzeuggeschwindigkeit $\omega_{FZG}$ betrachtet, da Bremsen- und Motoreingriffe linear auf die Raddrehzahl wirken. Für die Nichtlinearität ist es aber unerheblich, ob sie in Abhängigkeit vom relativen oder absoluten Schlupf ausgedrückt wird.

An Stelle der Gleichung (8) ergibt sich sodann die Gleichung

$$F(\omega) = (1 - z) \cdot z_{max} \cdot (\omega - \omega_{FZG}) + z \cdot z_{min} \cdot (\omega - \omega_{FZG}) \qquad (9)$$

wobei z nun durch

$$z = \left( \frac{F}{\omega - \omega_{FZG}} - z_{max} \right) / \left( z_{min} - z_{max} \right) \qquad (10)$$

gegeben ist.

Damit kann nun ein linearer Zusammenhang zwischen der Radgeschwindigkeit $\omega$ des angetriebenen Rades, der Radkraft F und einer externen Kraft $F_{extern}$ aufgestellt werden. Die externe Kraft $F_{extern}$ wird beispielsgemäß über Motoreingriffe und/oder Bremseneingriffe erzeugt. Unter der Annahme einer Massenträgheit J am Rad ergeben sich die beiden Teilmodelle zu:

Modellteilsystem 1:

$$\frac{d(\omega - \omega_{FZG})}{dt} = -F(\omega)/J + F_{extern}/J = -z_{min} \cdot (\omega - \omega_{FZG})/J + F_{extern}/J$$

Modellteilsystem 2:

$$\frac{d\left(\omega - \omega_{FZG}\right)}{dt} = -z_{max} \cdot \left(\omega - \omega_{FZG}\right)/J + F_{extern}/J$$

Beide Teilmodelle werden beispielsgemäß über eine Gewichtung mit der Variable z (analog zur Radkraft F) zu einem Gesamtmodell kombiniert:

$$\frac{d\left(\omega - \omega_{FZG}\right)}{dt} = \left(1-z\right) \cdot \left(-z_{max} \cdot \left(\omega - \omega_{FZG}\right)/J\right) \\ + z \cdot \left(-z_{min} \cdot \left(\omega - \omega_{FZG}\right)/J\right) + F_{extern}/J \qquad (11)$$

Das so kombinierte Gesamtmodell approximiert das ursprüngliche, nichtlineare Modell vollständig. Gegenüber dem nichtlinearen Ursprungsmodell treten beim kombinierten Gesamtmodell aber die beiden linearen Teilmodelle und die Nichtlinearität in z stärker hervor. Dies vereinfacht den weiteren Entwurf, wenn für jedes der beiden linearen Teilmodelle ein linearer Regler entworfen wird, der über die externe Kraft $F_{extern}$ das Systemverhalten beeinflusst: Teilregler für Modellteilsystem 1:

$$F_{extern,\,1} = k_1 \cdot \left(\omega - \omega_{FZG}\right) \qquad (12)$$

Teilregler für Modellteilsystem 2:

$$F_{extern,\,2} = k_2 \cdot \left(\omega - \omega_{FZG}\right) \qquad (13)$$

Dabei ist der Parameter $k_1$ bzw. $k_2$ ein vorgegebener Regelparameter des Teilreglers $C_L$ des Teilsystems 1 ("low $\mu$") bzw. des Teilreglers $C_H$ des Teilsystems 2 ("high $\mu$").

Beide Teilregler können über eine Gewichtung mit der Variable z (analog zur Radkraft F) zu einem Gesamtregler kombiniert werden:

$$F_{extern} = \left(1-z\right) \cdot k_1 \cdot \left(\omega - \omega_{FZG}\right) + z \cdot k_2 \cdot \left(\omega - \omega_{FZG}\right) \qquad (14)$$

In der Kombination wird dabei derjenige Teilregler $C_L$ bzw. $C_H$ am stärksten über die Variable z gewichtet, welcher in seinem Entwurf einer charakteristischen Radkraft $F_{min}$ bzw. $F_{max}$ entspricht, welche am ehesten der aktuell anliegenden Radkraft F entspricht. Auch wenn die Teilregler linear sind, ist der Gesamtregler wegen der Gewichtung mit z ein nichtlinearer Regler.

Zurückkommend auf das in Fig. 2 schematisch dargestellte ersten Ausführungsbeispiel bedeutet dies, das beispielsgemäß die beiden linearen Teilregler $C_L$ bzw. $C_H$ für die beiden (vorgegebenen) charakteristischen Radkraftverläufe $F_{min}$ bzw. $F_{max}$ entworfen sind und von dem Teilreglerparameter $k_1$ bzw. $k_2$ abhängen. Teilregler $C_L$ ist demnach für eine charakteristische Radkraft $F_{min}$ entworfen, bei welcher das Rad auf einem extremen Niedrigreibwert ("low $\mu$") steht, während Teilregler $C_H$ für eine charakteristische Radkraft $F_{max}$ entworfen wurde, bei welcher das Rad auf einem extremen Hochreibwert ("high $\mu$") steht. Wie weiter oben bereits beschrieben, liefert jeder der beiden Teilregler $C_L$ bzw. $C_H$ einen Stellgrößenvorschlag $u_L$ bzw. $u_H$. Beispielsgemäß werden aus der Radkraftvariablen z anhand von vorgegebenen Zugehörigkeitsfunktionen in Block 2 Gewichtungsfaktoren $w_L$ und $w_H$ bestimmt. Die Stellgrößenvorschläge $u_L$ und $u_H$ werden mit dem entsprechenden Gewichtungsfaktor $w_L$ bzw. $w_H$ multipliziert und werden in Block 1 zu der (Gesamt)Stellgröße u aufaddiert.

Die Stellgrößenvorschläge $u_L$, $u_H$ und die Gesamtstellgröße u betreffen alle in der Antriebsschlupfregelung geregelten Größen. Bei einer Antriebsschlupfregelung durch Bremseingriff an einem Rad und Regelung des Antriebsmoments, stehen die Stellgrößen $u_L$, $u_H$ und u beispielsgemäß jeweils für den Bremsdruck in der Radbremse und das Motorantriebsmoment. Es kann sich bei den Stellgrößen $u_L$, $u_H$ und u (insbesondere auch bei den weiter unten beschriebenen Fahrzeugen mit mehr als einem angetriebenen Rad) also um mehrdimensionale Größen, z.B. mathematisch in Form von Vektoren beschrieben, handeln.

Auf extremen Niedrigreibwert ("low μ") liegen die Werte der Radkraftvariablen z z.B. bei der Steigung $z_{min}$. Die resultierenden Gewichtungsfaktoren $w_L$ und $w_H$ werden dann zu etwa $w_L$ = 100% und $w_H$ = 0% bestimmt. Sie selektieren damit den Teilregler $C_L$ zu 100%. Dies entspricht der Anschauung, denn der Regler $C_L$ wurde für Steigungen von $z_{min}$ entworfen. Er berücksichtigt von den beiden Reglern am besten den extremen Niedrigreibwert ("low μ").

Es hat sich gezeigt, dass es für die Stabilität des Gesamtreglers vorteilhaft ist, Zusatzbedingungen vorzugeben. Optional gehen die Zusatzbedingungen als Eingangsgrößen in jeden Teilregler ein.

Beispielsgemäß werden die Zusatzbedingungen in Form von mindestens einer Stellgrößenbegrenzung $\bar{u}$ berücksichtigt. Dies ist in Fig. 3 anhand der gestrichelten Linien dargestellt. Die Stellgrößenbegrenzung $\bar{u}$ für Bremsedruck/drücke und/oder Motormoment geht als Eingangsgröße in die Teilregler $C_L$ bzw. $C_H$ ein.

Eine Erweiterung des oben beschriebenen Prinzips auf ein Fahrzeug (Pkw) mit zwei oder vier angetriebenen Rädern ist einfach möglich.

Für jedes angetriebene Rad j wird, entsprechend wie oben für ein einziges angetriebenes Rad beschrieben, die Radkraft $F^j$ in eine Kombination von mindestens zwei charakteristischen Radkräften $F^j_i$ aufgeteilt, zum Beispiel in eine Kombination der beiden charakteristischen Radkräfte $F_{min}$ und $F_{max}$ wie oben beschrieben. Für jeweils gegebene Gewichtsfunktionen (z.B. $f_{min}(z)$ und $f_{max}(z)$) und Steigungen (z.B. $z_{min}$ und $z_{max}$) wird für jedes Rad j eine Radkraftvariable $z^j$ aus den (aktuellen) Werten von Radkraft $F^j$ und Schlupft $\lambda^j$ bestimmt. Mit diesem Ansatz lässt sich das nichtlineare Gesamtmodell wieder in lineare Teilmodelle zerlegen, für welches jeweils ein linearer Teilregler entworfen werden kann. Der Gesamtregler ist wegen der Gewichtung mit den Radkraftvariablen $z^j$ wieder ein nichtlinearer Regler. Durch die Kopplungen zwischen den Rädern ergeben sich komplexere lineare Entwurfsmodelle, die aber mit an sich bekannten linearen Entwurfsverfahren beherrschbar sind. Ein beispielsgemäßer Ansatz ist der Entwurf über lineare Zustandsregler. Stellgrößenbegrenzungen können über Anti-Windup-Maßnahmen berücksichtigt werden.

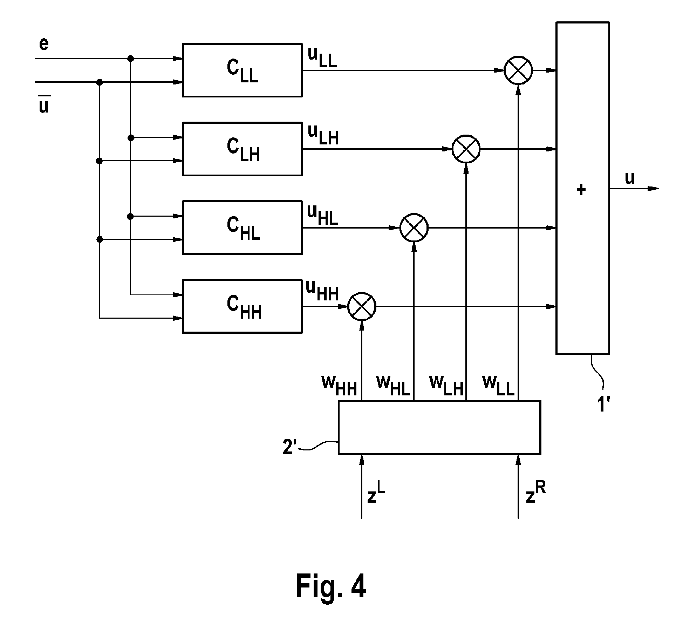

In Fig. 4 ist eine Reglerstruktur eines zweiten Ausführungsbeispiels einer erfindungsgemäßen Antriebsschlupfregelung für ein Fahrzeug mit zwei angetriebenen Rädern L (Linkes Rad) und R (Rechtes Rad) schematisch dargestellt (j=L, R). Die Regelabweichung e beschreibt für jedes Rad L, R die Differenz zwischen der aktuellen Raddrehzahl $\omega^j$ und der Raddrehzahlsollgröße $\omega^j$ soll (kurz: e= $(e^L, e^R)$=$(\omega^L_{soll}-\omega^L, \omega^R_{soll}-\omega^R)$), wobei die Sollgrößen $\omega^j_{soll}$ von einer übergeordneten Struktur des Antriebsregelungssystems vorgegeben werden. Die Regelabweichung e soll von dem Regler zu Null ausgeregelt werden. Neben der Regelabweichung e gehen optional Stellgrößenbegrenzungen $\bar{u}$ für Motor und/oder die beiden Radbremsen in den Regler als Eingangsgrößen ein.

Jeder der vier linearen Teilregler $C_{LL}$, $C_{LH}$, $C_{HL}$ und $C_{HH}$ ist für eine Kombination von einer der charakteristischen Radkraftverläufe für jedes der beiden Räder L, R entworfen worden. Optional ist jeder Teilregler um Anti-Windup-Maßnahmen ergänzt. Der $C_{LL}$-Regler ist beispielsgemäß für eine Kombination von charakteristischen Radkräften entworfen, für die beide Räder L, R auf extremen Niedrigreibwert ("low μ" für Rad L, "low μ" für Rad R) stehen. Entsprechend wurde der $C_{HH}$-Regler für eine Kombination von charakteristischen Radkräften entworfen, bei denen beide Räder L, R auf extremen Hochreibwert stehen. Der $C_{LH}$-Regler ist für eine Kombination von charakteristischen Radkräften entworfen, für die das linke Rad L auf extremen Niedrigreibwert ("low μ") und das rechte Rad R auf extremen Hochreibwert ("high μ") steht. Entsprechend steht der Regler $C_{HL}$ für linkes Rad L auf extremen Hochreibwert ("high μ") und rechtes Rad R auf extremen Niedrigreibwert ("low μ") . Jeder der Teilregler $C_{LL}$, $C_{LH}$, $C_{HL}$ und $C_{HH}$ wird durch einen anderen Parametersatz $P_{LL}$, $P_{LH}$, $P_{HL}$ und $P_{HH}$ beschrieben.

Jeder Teilregler $C_{LL}$, $C_{LH}$, $C_{HL}$ oder $C_{HH}$ gibt einen Stellgrößenvorschlag $u_{LL}$, $u_{LH}$, $u_{HL}$ bzw. $u_{HH}$ aus. In Block 2' werden anhand von vorgegebenen Zugehörigkeitsfunktionen aus den Radkraftvariablen $z^L$, $z^R$ der beiden Räder L, R die jeweiligen Gewichtungsfaktoren $w_{LL}$, $w_{LH}$, $w_{HL}$ und $w_{HH}$ der Teilregler $C_{LL}$, $C_{LH}$, $C_{HL}$ oder $C_{HH}$ bestimmt. In Block l' werden die Stellgrößenvorschläge $u_{LL}$, $u_{LH}$, $U_{HL}$ und $u_{HH}$ der Teilregler $C_{LL}$, $C_{LH}$, $C_{HL}$ oder $C_{HH}$ dann gemäß den Gewichtungsfaktoren $w_{LL}$, $w_{LH}$, $W_{HL}$ und $w_{HH}$ gewichtet zur Gesamtstellgröße u aufaddiert. Somit werden die Stellgrößenvorschläge $u_{LL}$, $u_{LH}$, $u_{HL}$ und $u_{HH}$ der Teilregler $C_{LL}$, $C_{LH}$, $C_{HL}$ oder $C_{HH}$ in Abhängigkeit von den beiden Radkraftvariablen $z^L$ und $z^R$ in der Gesamtstellgröße u berücksichtigt.

Die Nichtlinearität des Systems wird durch die gewichtete Überlagerung der Regler bzw. ihrer Ergebnisse in Abhängigkeit von den Radkraftvariablen und damit der Radkräfte erfasst. Diese Überlagerung kann als ein inneres Gain-Scheduling-Verfahren verstanden werden.

Entsprechend den obigen Ausführungen zu Fig. 2 stellen die Stellgrößen $U_{LL}$, $u_{LH}$, $u_{HL}$, $u_{HH}$, u, $\bar{u}$ mehrdimensionale Größen (mathematisch: Vektoren) dar. Im Fall einer Antriebsschlupfregelung durch Bremseingriff an den angetriebenen Rädern und Regelung des Antriebsmoments, gibt jede der Stellgrößen die Bremsdrücke an den Radbremsen und das Motorantriebsmoment wieder.

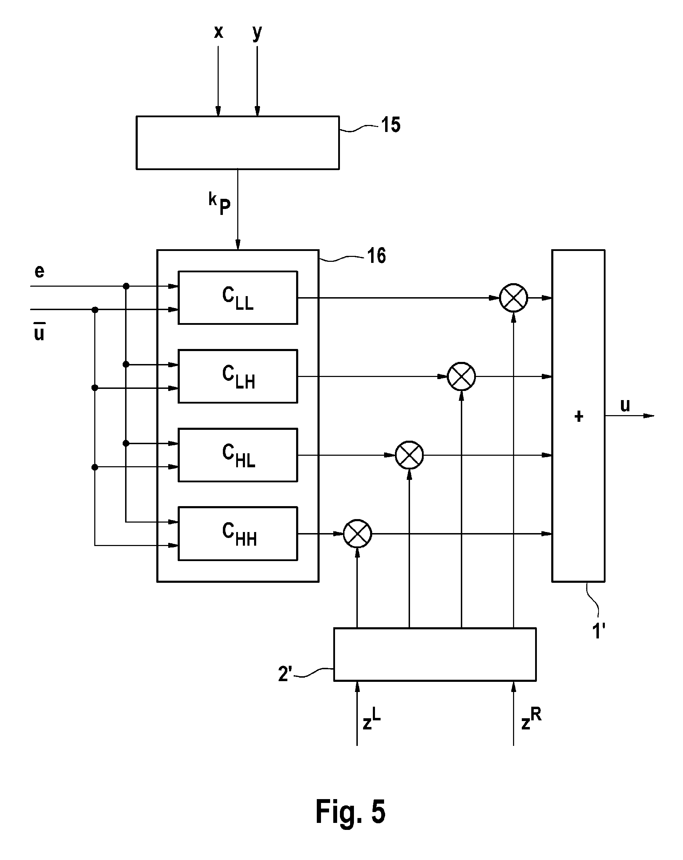

In Fig. 5 ist eine Reglerstruktur eines dritten Ausführungsbeispiels einer erfindungsgemäßen Antriebsschlupfregelung für ein Fahrzeug mit zwei angetriebenen Rädern L (Linkes Rad) und R (Rechtes Rad) schematisch dargestellt (j=L, R). In Erweiterung der anhand von Fig. 4 beschriebenen Reglerstruktur sind die Parametersätze der vier Teilregler $C_{LL}$, $C_{LH}$, $C_{HL}$ und $C_{HH}$ je Regler auf zwei oder mehr verschiedene Parametersätze umschaltbar bzw. anpassbar.

In Block 15 wird in Abhängigkeit von einem Betriebszustand X des Fahrzeugs und/oder eines Fahrzustandes Y des Fahrzeugs für jeden Teilregler $C_{LL}$, $C_{LH}$, $C_{HL}$ und $C_{HH}$ ein bestimmter Parametersatz $^kP_{LL}$, $^kP_{LH}$, $^kP_{HL}$ und $^kP_{HH}$ (kurz : $^kP= (^kP_{LL}$, $^kP_{LH}$ , $^kP_{HL}$, $^kP_{HH}$)) gewählt.

Die Auswahl/Erkennung eines Betriebszustandes X erfolgt z.B. durch das Betätigen eines Tasters durch den Fahrer. In Abhängigkeit vom Tasterzustand werden Betriebszustände wie z.B. Normalmodus, Sportmodus oder Offroad-Modus erkannt, für welche unterschiedliche Reglerparametersätze $^kP$ (k=1, 2,...) vorgegeben sind, welche unterschiedlichen Reglerauslegungen entsprechen (z.B. mehr Stabilität oder mehr Traktion). So wird der Fahrerwunsch bei der Antriebsschlupfregelung berücksichtigt.

Zusätzlich oder alternativ werden beispielsgemäß Fahrzustände Y anhand von im Fahrzeug verfügbaren Sensorinformationen erkannt. Hierzu werden z.B. die Signale eines Gierratensensors und/oder eines Beschleunigungssensors und/oder eines Lenkwinkelsensors und/oder eines Raddrehzahlsensors herangezogen. Über eine Logik in Block 15 wird dann anhand der Sensorinformationen der entsprechende Reglerparametersatz $^kP$ für die aktuelle Fahrsituation optimal gewählt. Typische Fahrsituationen, für welche eine automatische Fahrzustandserkennung mit Anpassung der Antriebsschlupfregelung vorteilhaft ist, sind z.B. Anfahrvorgänge oder Hochreibwertkurven.

Die Umschaltung der Parametersätze der Teilregler $C_{LL}$, $C_{LH}$, $C_{HL}$ und $C_{HH}$ auf die in Block 15 gewählten Parametersätze $^kP$ wird in Block 16 durchgeführt.

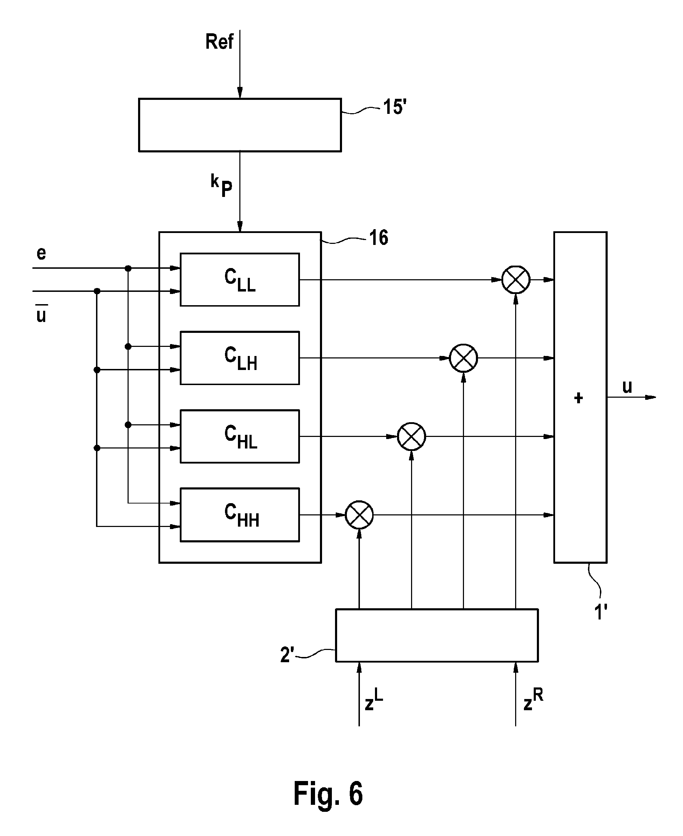

Das in Fig. 6 dargestellte vierte Ausführungsbeispiel entspricht weitgehend dem in Fig. 5 dargestellten dritten Ausführungsbeispiel. Als Größe zur Charakterisierung des Fahrzustandes Y wird beispielsgemäß die Fahrzeuggeschwindigkeit Ref herangezogen. In Block 15' wird die Auswahl der Parametersätze $^kP$ der vier Teilregler $C_{LL}$, $C_{LH}$, $C_{HL}$ und $C_{HH}$ in Abhängigkeit von der Fahrzeuggeschwindigkeit Ref durchgeführt, und die Umschaltung der Parametersätze der Teilregler $C_{LL}$, $C_{LH}$, $C_{HL}$ und $C_{HH}$ auf die gewählten Parametersätze $^kP$ wird in Block 16 durchgeführt.

Die Erweiterung auf umschaltbare bzw. anpassbare Parametersätze der Teilregler kann als ein äußeres Gain-Scheduling-Verfahren verstanden werden, mit dem die Teilreglerparameter zur Verbesserung des Regelverhaltens an feste Betriebsmodi und/oder Fahrzustände angepasst werden. Diese Struktur liefert zusätzliche Freiheitsgrade für die Anpassung des Reglers.

Die Aufteilung in ein inneres und ein äußeres Gain-Scheduling-Verfahren hat den Vorteil, dass eine Aufgabenteilung besteht. Das innere Gain-Scheduling-Verfahren berücksichtigt die starke Abhängigkeit des Regelsystems vom Fahrbahnuntergrund. Das äußere Gain-Scheduling-verfahren ermöglicht die Anpassung der Teilregler an unterschiedliche Applikationsziele.

Bei den Teilreglern $C_L$, $C_H$ bzw. $C_{LL}$, $C_{HL}$, $C_{LH}$, $C_{HH}$ handelt es sich beispielsgemäß um lineare Zustandregler mit integraler Rückführung.

Die Teilregler $C_L$, $C_H$ bzw. $C_{LL}$, $C_{HL}$, $C_{LH}$, $C_{HH}$ sind beispielsgemäß um Anti-Windup-Maßnahmen ergänzt, um Stellgrößenbegrenzungen $\bar{u}$ zu berücksichtigen.

**Patentansprüche**

1. Verfahren zur Antriebsschlupfregelung eines Fahrzeugs mit mindestens einem angetriebenen Rad (R, L), wobei mindestens eine radspezifische Kenngröße ($\omega_R$, $\omega_L$) zur Bemessung und/oder Modulation eines Bremsdruckes einer Radbremse eines angetriebenen Rades (R, L) und zur Beeinflussung eines Antriebsmomentes eines Antriebsmotors herangezogen wird, bei welchem mittels mindestens eines Reglers in Abhängigkeit von einer Regelabweichung (e) von einer Sollgröße der radspezifischen Kenngröße ($\omega_R$, $\omega_L$) eine Ausgabestellgröße für die Radbremse und eine Ausgabestellgröße für den Antriebsmotor erzeugt wird, **dadurch gekennzeichnet, dass** der Regler mindestens zwei, jeweils speziell für verschiedene Reibwertsituationen entworfene, lineare Teilregler ($C_L$, $C_H$; $C_{LL}$, $C_{LH}$, $C_{HL}$, $C_{HH}$) umfasst, welche jeweils in Abhängigkeit von der Regelabweichung (e) einen Stellgrößenvorschlag ($u_L$, $u_H$; $u_{LL}$, $u_{LH}$. $u_{HL}$, $u_{HH}$) bestimmen, welcher einen Stellgrößenvorschlag für die Radbremse und einen Stellgrößenvorschlag für den Antriebsmotor umfasst und wobei die Teilregler so ausgelegt werden, dass die Radantriebskräfte des/der angetriebenen Rades/Räder einen Einfluss auf die Regelstrategie haben, und dass aus den Stellgrößenvorschlägen ($u_L$, $u_H$; $u_{LL}$, $u_{LH}$, $u_{HL}$, $u_{HH}$) der Teilregler ($C_L$, $C_H$; $C_{LL}$, $C_{LH}$, $C_{HL}$, $C_{HH}$) durch gewichtete Addition (1) eine Ausgabestellgröße (u) bestimmt wird, welche eine Ausgabestellgröße für die Radbremse und eine Ausgabestellgröße für den Antriebsmotor umfasst.

2. Verfahren nach Anspruch 1, **dadurch gekennzeichnet, dass** für den Entwurf des Reglers die Radantriebskraft (F) eines, insbesondere jedes, angetriebenen Rades (L, R) als eine gewichtete Summe von mindestens zwei charakteristischen Radkräften ($\lambda$-$z_{max}$, $\lambda$-$z_{min}$) dargestellt wird, wobei jede charakteristische Radantriebskraft ($\lambda$-$z_{max}$ $\lambda$-

$z_{min}$) eine lineare Funktion des Schlupfs ($\lambda$) des entsprechenden Rades mit einer vorgegebenen Steigungsgröße ($z_{max}$, $z_{min}$) ist, und wobei die Gewichtung der einzelnen charakteristischen Radkräfte ($\lambda$-$z_{max}$, $\lambda$-$z_{min}$) in Form von Gewichtsfunktionen ($f_{min}(z)$, $f_{max}(z)$) in Abhängigkeit von einer Radkraftvariablen ($z$) des entsprechenden angetriebenen Rades vorgegeben ist, und dass die Radkraftvariable ($z$) des entsprechenden Rades aus einer aktuellen Radantriebskraft ($F$) und einem aktuellen Radschlupf ($\lambda$) bestimmt wird.

**3.** Verfahren nach Anspruch 2, **dadurch gekennzeichnet, dass** die beiden Steigungsgrößen ($z_{max}$, $z_{min}$) derart vorgegeben sind, dass die eine charakteristische Radantriebskraft ($\lambda$-$z_{min}$) einer Situation entspricht, in welcher das Rad mit einer Oberfläche mit einem Niedrigreibwert ($z_{min}$) in Kontakt steht, und die andere charakteristische Radantriebskraft ($\lambda$-$z_{max}$) einer Situation entspricht, in welcher das Rad mit einer Oberfläche mit einem Hochreibwert ($z_{max}$) in Kontakt steht.

**4.** Verfahren nach mindestens einem der Ansprüche 1 bis 3, **dadurch gekennzeichnet, dass** die gewichtete Addition der Stellgrößenvorschläge ($u_L$, $u_H$; $u_{LL}$, $u_{LH}$, $u_{HL}$, $u_{HH}$) der Teilregler ($C_L$, $C_H$; $C_{LL}$, $C_{LH}$, $C_{HL}$, $C_{HH}$) in Abhängigkeit von einer Radkraftvariablen ($z$) des angetriebenen Rades oder von Radkraftvariablen ($Z_L$, $Z_R$) der angetriebenen Räder durchgeführt wird, wobei für jedes angetriebene Rad die Radkraftvariable ($z$; $Z_L$, $Z_R$) aus einer aktuellen Radantriebskraft ($F$) und einem aktuellen Radschlupf ($\lambda$), insbesondere mittels mindestens zweier, vorgegebener Steigungsgrößen ($z_{max}$, $z_{min}$) und mindestens zweier, vorgegebener Gewichtsfunktionen ($f_{mir}(z)$, $f_{max}(2)$), bestimmt wird.

**5.** Verfahren nach mindestens einem der Ansprüche 2 bis 4, **dadurch gekennzeichnet, dass** bei einem einzigen angetriebenen Rad jeder lineare Teilregler ($C_L$, $C_H$) für eine der charakteristischen Radkräfte ($\lambda$-$z_{max}$, $\lambda$-$z_{min}$) entworfen ist oder dass bei mindestens zwei angetriebenen Rädern (L, R) die linearen Teilregler ($C_{LL}$, $C_{LH}$. $C_{HL}$, $C_{HH}$) für alle verschiedenen Kombinationen (LL, LH, HL, HH) von charakteristischen Radkräften der angetriebenen Räder entworfen sind.

**6.** Verfahren nach Anspruch 5, **dadurch gekennzeichnet, dass** bei zwei angetriebenen Rädern (L, R) der Regler vier lineare Teilregler ($C_{LL}$, $C_{LH}$, $C_{HL}$, $C_{HH}$) umfasst, wobei ein erster Teilregler für eine Kombination (LL) von charakteristischen Radkräften entworfen ist, bei welcher beide Räder (L, R) mit einer Oberfläche mit einem Niedrigreibwert ($z_{min}$) in Kontakt stehen, ein zweiter und ein dritter Teilregler für jeweils eine Kombination (LH, HL) von charakteristischen Radkräften entworfen ist, bei welcher eines der beiden Räder (L; R) mit einer Oberfläche mit einem Niedrigreibwert ($z_{min}$) in Kontakt steht während das andere der beiden Räder (R; L) mit einer Oberfläche mit einem Hochreibwert ($z_{max}$) in Kontakt steht, und ein vierter Teilregler für eine Kombination (HH) von charakteristischen Radkräften entworfen ist, bei welcher beide Räder (L, R) mit einer Oberfläche mit einem Hochreibwert ($z_{max}$) in Kontakt stehen.

**7.** Verfahren nach mindestens einem der Ansprüche 2 bis 6, **dadurch gekennzeichnet, dass** die Radantriebskraft jedes angetriebenen Rades [L, R) als gewichtete Summe von zwei charakteristischen Radkräften ($\lambda \cdot z_{max}$, $\lambda \cdot z_{min}$ betrachtet wird, wobei eine der beiden Gewichtsfunktionen ($f_{min}(z)$) durch die Radkraftvariable ($z$) des entsprechenden Rades gegeben ist und die andere Gewichtsfunktion ($f_{max}(z)$) durch die Differenz von Eins und der Radkraftvariablen ($1$-$z$) gegeben ist.

**8.** Verfahren nach mindestens einem der Ansprüche 2 bis 8, **dadurch gekennzeichnet, dass** die Stellgrößenvorschläge ($u_L$, $u_H$; $u_{LL}$, $u_{LH}$, $u_{HL}$, $u_{HH}$ der Teilregler ($C_L$, $C_H$; $C_{LL}$, $C_{LH}$, $C_{HL}$, $C_{HH}$) gewichtet (12) mit jeweiligen Gewichtungsfaktoren ($w_{LL}$, $w_{LH}$, $w_{HL}$, $w_{HH}$) zu der Ausgabestellgröße ($u$) aufaddiert werden (11), wobei die Gewichtungsfaktoren ($w_{LL}$, $w_{LH}$, $w_{HL}$, $w_{HH}$) anhand von vorgegebenen Zugehörigkeitsfunktionen (10), insbesondere durch eine Fuzzy-Funktion, aus der Radkraftvariable des Rades ($z$) oder den Radkraftvariablen der Räder ($Z_L$, $Z_R$) bestimmt werden.

**9.** Verfahren nach mindestens einem der vorhergehenden Ansprüche, **dadurch gekennzeichnet, dass** jeder Teilregler ($C_L$, $C_H$) durch zumindest einen vorgegebenen Regelparameter ($k_1$, $k_2$) oder Rege-parametersatz definiert wird.

**10.** Verfahren nach Anspruch 9, **dadurch gekennzeichnet, dass** für zumindest einen, insbesondere für jeden, Teilregler ($C_L$, $C_H$; $C_{LL}$, $C_{LH}$, $C_{HL}$, $C_{HH}$) zumindest zwei unterschiedliche Regelparameter oder Regelparametersätze vorgegeben sind, und dass der Regler in Abhängigkeit von einem Betriebszustand, insbesondere einem Tasterzustand, und/oder von einem Fahrzustand, insbesondere der Fahrzeuggeschwindigkeit (Ref), zwischen den unterschiedlichen Regelparametern oder Regelparametersätzen des Teilreglers, insbesondere der Teilregler, umschaltet.

11. Antriebsschlupfregelsystem eines Fahrzeuges mit mindestens einem angetriebenen Rad (R, L), welches mindestens ein elektronisches Steuergerät zur Regelung eines Bremsdruckes einer Radbremse eines angetriebenen Rades (R, L) und eines Antriebsmomentes eines Antriebsmotors, mindestens ein Mittel zur Erfassung mindestens einer radspezifischen Kenngröße ($\omega_R$, $\omega_L$) sowie einen Regler umfasst, wobei der Regler in Abhängigkeit von einer Regelabweichung (e) von einer Sollgröße der radspezifischen Kenngröße ($\omega_R$, $\omega_L$) eine Ausgabestellgröße für die Radbremse und eine Ausgabestellgröße für den Antriebsmotor erzeugt, **dadurch gekennzeichnet, dass** der Regler mindestens zwei, insbesondere für verschiedenen Reibwertsituationen jeweils speziell entworfene, lineare Teilregler ($C_L$, $C_H$; $C_{LL}$, $C_{LH}$, $C_{HL}$, $C_{HH}$) umfasst, welche jeweils in Abhängigkeit von der Regelabweichung (e) einen Stellgrößenvorschlag ($u_L$, $u_H$; $u_{LL}$, $u_{LH}$, $u_{HL}$, $u_{FH}$) bestimmen, welcher einen Stellgrößenvorschlag für die Radbremse und einen Stellgrößenvorschlag für den Antriebsmotor umfasst und wobei die Teilregler so ausgelegt, werden, dass die Radantriebskräfte des/der angetrielaenen Rades/Rader einen Einfluss auf die Regelstrategie haben, und dass der Regler ein Mittel umfasst, in welchem aus den Stellgrößenvorschlägen ($u_L$, $u_H$; $U_{LL}$, $u_{LH}$, $u_{HL}$, $u_{HH}$) der Teilregler ($C_L$, $C_H$; $C_{LL}$, $C_{LH}$, $C_{HL}$, $C_{HH}$) durch gewichtete Addition eine Ausgabestellgröße (u) bestimmt wird, welche eine Ausgabestellgröße für die Radbremse und eine Ausgabestellgröße für den Antriebsmotor umfasst.

**Claims**

1. Method for traction control of a vehicle having at least one driven wheel (R, L), at least one wheel-specific characteristic ($\omega_R$, $\omega_L$) being used for the proportioning and/or modulation of a brake pressure of a wheel brake of a driven wheel (R, L) and for influencing a drive torque of a drive engine, in which at least one controller serves for generating an output manipulated variable for the wheel brake and an output manipulated variable for the drive engine as a function of a control deviation (e) from a target size of the wheel-specific characteristic ($\omega_P$, $\omega_L$), **characterized in that** the controller comprises at least two linear sub-controllers ($C_L$, $C_H$; $C_{LL}$, $C_{LH}$, $C_{HL}$, $C_{HH}$), each specially designed for different coefficient of friction situations, which as a function of the control deviation (e) each determine a manipulated variable suggestion ($u_L$, $u_H$; $u_{LL}$, $u_{LH}$, $u_{HL}$, $u_{HH}$), which comprises a manipulated variable suggestion for the wheel brake and a manipulated variable suggestion for the drive engine and wherein the sub-controllers are designed in such a manner that the wheel drive forces of the driven wheel(s) have an influence on the control strategy, and that from the manipulated variable suggestions ($u_L$, $u_H$; $u_{LL}$, $u_{LH}$, $u_{HL}$, $u_{HH}$) of the sub-controllers ($C_L$, $C_H$; $C_{LL}$, $C_{LH}$, $C_{HL}$, $C_{HH}$) an output manipulated variable (u), which comprises an output manipulated variable for the wheel brake and an output manipulated variable for the drive engine, is determined by weighted addition (1).

2. Method according to Claim 1, **characterized in that** for designing the controller the wheel drive force (F) of one and in particular each driven wheel (L, R) is represented as a weighted sum of at least two characteristic wheel forces ($\lambda \cdot z_{max}$, $\lambda \cdot z_{min}$), each characteristic wheel drive force ($\lambda \cdot z_{max}$, $\lambda \cdot z_{min}$) being a linear function of the slip ($\lambda$) of the corresponding wheel having a preset gradient variable ($z_{max}$, $z_{min}$), and the weighting of the individual characteristic wheel forces ($\lambda \cdot z_{max}$, $\lambda \cdot z_{min}$) being preset in the form of weight functions ($f_{min}(z)$, $f_{max}(z)$) as a function of a wheel force variable (z) of the corresponding driven wheel, and that the wheel force variable (z) of the corresponding wheel is determined from an actual wheel drive force (F) and an actual wheel slip ($\lambda$).

3. Method according to Claim 2, **characterized in that** the two gradient variables ($z_{max}$, $z_{min}$) are preset in such a way that the one characteristic wheel drive force ($\lambda \cdot z_{min}$) corresponds to a situation, in which the wheel is in contact with a surface having a low coefficient of friction ($z_{min}$), and the other characteristic wheel drive force ($\lambda \cdot z_{max}$) corresponds to a situation, in which the wheel is in contact with a surface having a high coefficient of friction ($z_{max}$).

4. Method according to at least one of Claims 1 to 3, **characterized in that** the weighted addition of the manipulated variable suggestions ($u_L$, $u_H$; $u_{LL}$, $u_{LH}$, $u_{HL}$, $u_{HH}$) of the sub-controllers ($C_L$, $C_H$; $C_{LL}$, $C_{LH}$, $C_{HL}$, $C_{HH}$) is performed as a function of a wheel force variable (z) of the driven wheel or of wheel force variables ($Z_L$, $Z_R$) of the driven wheels, the wheel force variable (z; $Z_L$, $Z_R$) for each driven wheel being determined from an actual wheel drive force (F) and an actual wheel slip ($\lambda$), in particular by means of at least two preset gradient variables ($z_{max}$, $z_{min}$) and at least two preset weight functions ($f_{min}(z)$, $f_{max}(z)$).

5. Method according to at least one of Claims 2 to 4, **characterized in that** in the case of a single driven wheel each linear sub-controller ($C_L$, $C_H$) is designed for one of the characteristic wheel forces ($\lambda \cdot z_{max}$, $\lambda \cdot Z_{min}$) or that in the case of at least two driven wheels (L, R) the linear sub-controllers ($C_{LL}$, $C_{LH}$, $C_{HL}$, $C_{HH}$) are designed for all different combinations (LL, LH, HL, HH) of characteristic wheel forces of the driven wheels.

6. Method according to Claim 5, **characterized in that** in the case of two driven wheels (L, R) the controller comprises four linear sub-controllers ($C_{LL}$, $C_{LH}$, $C_{HL}$, $C_{HH}$), a first sub-controller being designed for a combination (LL) of characteristic wheel forces, in which both wheels (L, R) are in contact with a surface having a low coefficient of friction ($z_{min}$), a second and a third sub-controller each being designed for a combination (LH, HL) of characteristic wheel forces, in which one of the two wheels (L; R) is in contact with a surface having a low coefficient of friction ($z_{min}$) whilst the other of the two wheels (R; L) is in contact with a surface having a high coefficient of friction ($z_{max}$), and a fourth sub-controller being designed for a combination (HH) of characteristic wheel forces, in which both wheels (L, R) are in contact with a surface having a high coefficient of friction ($z_{max}$).

7. Method according to at least one of Claims 2 to 6, **characterized in that** the wheel drive force of each driven wheel (L, R) is regarded as the weighted sum of two characteristic wheel forces ($\lambda \cdot z_{max}$, $\lambda \cdot z_{min}$), one of the two weight functions ($f_{min}(z)$) being given by the wheel force variable (z) of the corresponding wheel and the other weight function ($f_{max}(z)$) being given by the difference between one and the wheel force variable (1-z).

8. Method according to one of Claims 2 to 8, **characterized in that** the manipulated variable suggestions ($u_L$, $u_H$; $u_{LL}$, $u_{LH}$, $u_{HL}$, $u_{HH}$) of the sub-controllers ($C_L$, $C_H$; $C_{LL}$, $C_{LH}$, $C_{HL}$, $C_{HH}$), weighted (12) by respective weighting factors ($W_{LL}$, $w_{LH}$, $w_{HL}$, $w_{HH}$), are added up (11) to arrive at the output manipulated variable (u), the weighting factors ($W_{LL}$, $w_{LH}$, $W_{HL}$, $w_{HH}$) being determined on the basis of preset affiliation functions (10), in particular through a fuzzy function, from the wheel force variable of the wheel (z) or the wheel force variables of the wheels ($Z_L$, $Z_R$).

9. Method according to at least one of the preceding claims, **characterized in that** each sub-controller ($C_L$, $C_H$) is defined by at least one preset control parameter ($k_1$, $k_2$) or control parameter set.

10. Method according to Claim 9, **characterized in that** at least two different control parameters or control parameter sets are preset for at least one and in particular for each sub-controller ($C_L$, $C_H$; $C_{LL}$, $C_{LH}$, $C_{HL}$, $C_{HH}$), and that the controller switches between the different control parameters or control parameter sets of the sub-controller, in particular the sub-controllers, as a function of an operating state, in particular a pushbutton switch state, and/or of a driving condition, in particular the vehicle speed (Ref).

11. Traction control system of a vehicle having at least one driven wheel (R, L), which comprises at least one electronic control unit for controlling a brake pressure of a wheel brake of a driven wheel (R, L) and a drive torque of a drive engine, at least one means for detecting at least one wheel-specific characteristic ($\omega_R$, $\omega_L$) and a controller, the controller generating an output manipulated variable for the wheel brake and an output manipulated variable for the drive engine as a function of a control deviation (e) from a target size of the wheel-specific characteristic (($\omega_R$, $\omega_L$), **characterized in that** the controller comprises at least two linear sub-controllers ($C_L$, $C_H$; $C_{LL}$, $C_{LH}$, $C_{HL}$, $C_{HH}$), particularly ones which are each specially designed for different coefficient of friction situations, which as a function of the control deviation (e) each determine a manipulated variable suggestion ($u_L$, $u_H$; $u_{LL}$, $u_{LH}$, $u_{HL}$, $u_{HH}$), which comprises a manipulated variable suggestion for the wheel brake and a manipulated variable suggestion for the drive engine and wherein the sub-controllers are designed in such a manner that the wheel drive forces of the driven wheel(s) have an influence on the control strategy, and that the controller comprises a means, in which, from the manipulated variable suggestions ($u_L$, $u_H$; $u_{LL}$, $u_{LH}$, $u_{HL}$, $u_{HH}$) of the sub-controllers ($C_L$, $C_H$; $C_{LL}$, $C_{LH}$, $C_{HL}$, $C_{HH}$), an output manipulated variable (u), which comprises an output manipulated variable for the wheel brake and an output manipulated variable for the drive engine, is determined by weighted addition.

**Revendications**

1. Procédé de régulation du patinage d'entraînement d'un véhicule qui présente au moins une roue motrice (R, L), dans lequel au moins une grandeur caractéristique (($\omega_R$, $\omega_L$) spécifique à la roue intervient pour dimensionner et/ou moduler la pression de freinage du frein d'une roue motrice (R, L) et pour agir sur le couple d'entraînement d'un moteur d'entraînement,

une grandeur de réglage de sortie du frein de roue et une grandeur de réglage de sortie du moteur d'entraînement étant formées au moyen d'au moins un régulateur en fonction d'un écart de réglage (e) entre la grandeur caractéristique ($\omega_R$, $\omega_L$ spécifique à la roue et une valeur de consigne,

**caractérisé en ce que**

le régulateur comporte au moins deux régulateurs linéaires partiels ($C_L$, $C_H$; $C_{LL}$, $C_{LH}$, $C_{HL}$, $C_{HH}$) conçus spécialement pour différentes situations de valeurs de frottement et qui déterminent en fonction de l'écart de réglage (e) une proposition ($u_L$, $u_H$; $u_{LL}$, $u_{LH}$, $u_{HL}$, $u_{HH}$) de grandeur de réglage qui comporte une proposition de grandeur de réglage pour le frein de roue et une proposition de grandeur de réglage pour le moteur d'entraînement,

**en ce que** les régulateurs partiels sont conçus de telle sorte que les forces d'entraînement de la ou des roues motrices exercent une influence sur la stratégie de régulation et

**en ce qu'**à partir des propositions ($u_L$, $u_H$; $U_{LL}$, $u_{LH}$, $u_{HL}$, $u_{HH}$) de grandeur de réglage des régulateurs partiels ($C_L$, $C_H$; $C_{LL}$, $C_{LH}$, $C_{RL}$, $C_{HH}$), une grandeur de réglage de sortie ($u$) qui comporte une grandeur de réglage de sortie pour le frein de roue et une grandeur de réglage de sortie pour le moteur d'entraînement est déterminée par addition pondérée (1).

2. Procédé selon la revendication 1, **caractérisé en ce que** pour le développement du régulateur, la force (F) d'entraînement d'une roue motrice (L, R) et en particulier de chaque roue motrice est représentée en tant que somme pondérée d'au moins deux forces caractéristiques de roue ($\lambda \cdot z_{max}$, $\lambda \cdot z_{min}$), chaque force caractéristique d'entraînement de roue ($\lambda \cdot z_{max}$, $\lambda \cdot z_{min}$) étant une fonction linéaire du patinage ($\lambda$) de la roue correspondante à une grandeur de pente prédéterminée ($z_{max}$, $z_{min}$), la pondération des différentes forces caractéristiques de roue ($\lambda \cdot z_{max}$, $\lambda \cdot z_{min}$) étant prédéterminée sous la forme de fonctions de pondération ($f_{min}(z)$, $f_{max}(z)$) en fonction d'une variable ($z$) de force de la roue motrice correspondante et **en ce que** la variable ($z$) de force de la roue correspondante est déterminée à partir d'une force effective (F) d'entraînement de la roue et du patinage effectif ($\lambda$) de la roue.

3. Procédé selon la revendication 2, **caractérisé en ce que** les deux grandeurs de pente ($Z_{max}$, $Z_{min}$) sont prédéterminées **en ce qu'**une des forces ($\lambda \cdot z_{min}$) caractéristiques d'entraînement de roue correspond à une situation dans laquelle la roue est en contact avec une surface qui présente une basse valeur de frottement ($z_{min}$), l'autre force caractéristique ($\lambda \cdot z_{max}$) d'entraînement de roue correspondant à une situation dans laquelle la roue est en contact avec une surface qui présente une valeur haute de frottement ($z_{max}$).

4. Procédé selon au moins l'une des revendications 1 à 3, **caractérisé en ce que** l'addition pondérée des propositions de grandeur de réglage ($u_L$, $u_H$; $u_{LL}$, $u_{LH}$, $u_{HL}$, $u_{HH}$) des régulateurs partiels ($C_L$, $C_H$; $C_{LL}$, $C_{LH}$, $C_{FL}$, $C_{HH}$) est réalisée en fonction d'une variable ($z$) de force de la roue motrice ou par des variables de force ($Z_L$, $Z_R$) des roues motrices, la variable ($z$; $Z_L$, $Z_R$) de force de chaque roue motrice étant déterminée à partir d'une force effective (F) d'entraînement de roue et d'un patinage effectif ($\lambda$) de la roue, en particulier au moyen d'au moins deux grandeurs de pente prédéterminées ($z_{max}$, $z_{min}$) et d'au moins deux fonctions de pondération prédéterminées ($f_{min}(z)$, $f_{max}(z)$).

5. Procédé selon au moins l'une des revendications 2 à 4, **caractérisé en ce que** lorsqu'une seule roue est motrice, chaque régulateur linéaire partiel ($C_L$, $C_H$) est conçu pour l'une des forces caractéristiques de roue ($\lambda \cdot z_{max}$, $\lambda \cdot z_{min}$) ou **en ce que** lorsqu'au moins deux roues (L, R) sont motrices, les régulateurs linéaires partiels ($C_{LL}$, $C_{LH}$, $C_{HL}$, $C_{HH}$) sont conçus pour toutes les combinaisons possibles (LL, LH, HL, HH) de forces caractéristiques des roues motrices.

6. Procédé selon la revendication 5, **caractérisé en ce que** lorsque deux roues (L, R) sont motrices, le régulateur comporte quatre régulateurs linéaires partiels ($C_{LL}$, $C_{LH}$, $C_{HL}$, $C_{HH}$), un premier régulateur partiel étant conçu pour une combinaison (LL) de forces caractéristiques de roue pour laquelle les deux roues (L, R) sont en contact avec une surface présentant une basse valeur de frottement ($z_{min}$), un deuxième et un troisième régulateur partiel pour une combinaison (LH, HL) de forces caractéristiques de roue dans laquelle l'une des deux roues (L; R) est en contact avec une surface à basse valeur de frottement ($z_{min}$) tandis que l'autre des deux roues (R; L) est en contact avec une surface présentant une haute valeur de frottement ($z_{max}$) et un quatrième régulateur partiel est conçu pour une combinaison (HH) de forces caractéristiques de roue dans laquelle les deux roues (L, R) sont en contact avec une surface présentant une haute valeur de frottement ($z_{max}$).

7. Procédé selon au moins l'une des revendications 2 à 6, **caractérisé en ce que** la force d'entraînement de chaque roue motrice (L, R) est considérée comme somme pondérée de deux forces caractéristiques de roue ($\lambda \cdot z_{max}$, $\lambda \cdot z_{min}$), l'une des deux fonctions de pondération ($f_{min}(z)$) étant définie par la variable de force ($z$) de la roue correspondante et l'autre fonction de pondération ($f_{max}(z)$) par la différence entre un et la variable de force ($1-z$) de la roue.

8. Procédé selon au moins l'une des revendications 2 à 8, **caractérisé en ce que** les propositions de grandeur de réglage ($u_L$, $u_H$; $U_{LL}$, $u_{LH}$, $u_{HL}$, $u_{HH}$) des régulateurs partiels ($C_L$, $C_H$; $C_{LL}$, $C_{LH}$, $C_{HL}$, $C_{HH}$) sont additionnées (11) de manière pondérée (12) par des facteurs de pondération ($w_{LL}$, $w_{LH}$, $w_{HL}$, $W_{HH}$) pour fournir la grandeur de réglage de sortie ($u$), les facteurs de pondération ($w_{LL}$, $w_{LH}$, $w_{HL}$, $w_{HH}$) étant déterminés à l'aide de fonctions prédéterminées d'appartenance (10), en particulier par une fonction à logique floue, à partir de la variable de force de roue ($z$) ou des variables de force des roues ($Z_L$, $Z_R$).

9. Procédé selon au moins l'une des revendications précédentes, **caractérisé en ce que** chaque régulateur partiel

($C_L$, $C_H$) est défini par au moins un paramètre de régulation prédéterminé ($k_1$, $k_2$) ou un jeu prédéterminé de paramètres de régulation.

10. Procédé selon la revendication 9, **caractérisé en ce qu'**au moins deux paramètres de régulation ou jeux des paramètres de régulateur différents sont prédéterminés pour au moins un régulateur partiel ($C_L$, $C_H$; $C_{LL}$, $C_{LH}$, $C_{HL}$, $C_{HH}$) et en particulier pour chaque régulateur partiel, et **en ce que** le régulateur commute entre les différents paramètres de régulation ou jeux de paramètres de régulation du régulateur partiel et en particulier des régulateurs partiels en fonction d'un état de fonctionnement, en particulier de l'état d'un palpeur, et/ou d'une situation de conduite, en particulier de la vitesse (Ref) du véhicule.

11. Système de régulation du patinage d'entraînement d'un véhicule présentant au moins une roue motrice (R, L), le système présentant au moins un appareil électronique de commande qui régule la pression de freinage du frein d'une roue motrice (R, L) et le couple d'entraînement du moteur d'entraînement, au moins un moyen de saisie d'au moins une valeur caractéristique ($\omega_R$, $\omega_L$) spécifique à la roue ainsi qu'un régulateur, le régulateur délivrant en fonction d'un écart de réglage (e) entre une grandeur de consigne et la grandeur caractéristique ($\omega_R$, $\omega_L$) spécifique à la roue une grandeur de réglage de sortie du frein de roue et une grandeur de réglage de sortie du moteur d'entraînement,
**caractérisé en ce que**
le régulateur comporte au moins deux régulateurs linéaires partiels ($C_L$, $C_H$; $C_{LL}$, $C_{LH}$, $C_{HL}$, $C_{HH}$) en particulier conçus spécialement pour différentes situations de valeurs de frottement et qui déterminent en fonction de l'écart de réglage (e) une proposition ($u_L$, $u_H$; $u_{LL}$, $u_{LH}$, $u_{HL}$, $u_{EH}$) de grandeur de réglage qui comporte une proposition de grandeur de réglage pour le frein de roue et une proposition de grandeur de réglage pour le moteur d'entraînement, **en ce que** les régulateurs partiels sont conçus de telle sorte que les forces d'entraînement de la ou des roues motrices exercent une influence sur la stratégie de régulation et
**en ce qu'**à partir des propositions ($u_L$, $u_H$; $u_{LL}$, $u_{LH}$, $u_{HL}$, $u_{HH}$) de grandeur de réglage des régulateurs partiels ($C_L$, $C_H$; $C_{LL}$, $C_{LH}$, $C_{HL}$, $C_{HH}$), une grandeur de réglage de sortie (u) qui comporte une grandeur de réglage de sortie pour le frein de roue et une grandeur de réglage de sortie pour le moteur d'entraînement est déterminée par addition pondérée.

Fig. 1

Fig. 2

**Fig. 3**

Fig. 4

**Fig. 5**

**Fig. 6**

**IN DER BESCHREIBUNG AUFGEFÜHRTE DOKUMENTE**

**In der Beschreibung aufgeführte Patentdokumente**

- DE 102004008265 A1

**In der Beschreibung aufgeführte Nicht-Patentliteratur**

- Die Fahrdynamikregelung von Bosch. **ZANTEN VAN A T et al.** Automatisierungstechnik - AT, Oldenburg Wissenschaftsverlag. München, 01. Juli 1996, vol. 44, 359-365